# EUROPÄISCHE PATENTSCHRIFT

(11) **EP 2 245 690 B1**
(45) Veröffentlichungstag und Bekanntmachung des Hinweises auf die Patenterteilung: **24.07.2013**
(21) Anmeldenummer: 09704666.8
(22) Anmeldetag: 15.01.2009
(51) Int. Cl.: H01M 8/04, H01M 8/10

(54) **VERFAHREN ZUM BETREIBEN EINES HOCHTEMPERATUR-POLYMERELEKTROLYT-BRENNSTOFFZELLENSYSTEMS (HT-PEFC)**
A METHOD FOR OPERATING A HIGH-TEMPERATURE POLYMER ELECTROLYTE FUEL CELL SYSTEM (HT-PEFC)
PROCÉDÉ DE FONCTIONNEMENT D'UN SYSTÈME DE PILES À COMBUSTIBLE À ÉLECTROLYTE POLYMÈRE À HAUTE TEMPÉRATURE (HT-PEFC)

(30) Priorität: 24.01.2008 DE 102008005841
(43) Veröffentlichungstag der Anmeldung: 03.11.2010
(73) Patentinhaber: Forschungszentrum Jülich Gmbh (FJZ), 52425 Jülich (DE)
(72) Erfinder: DOHLE, Hendrik, 52249 Eschweiler (DE); OETJEN, Hans-Friedrich, 52441 Linnich (DE); Schumacher, Birgit, 52428 Jülich (DE)
(86) Internationale Anmeldenummer: PCT/DE2009/000041
(87) Internationale Veröffentlichungsnummer: WO 2009/092350

(56) Entgegenhaltungen:
- WO-A-2006/134461
- DE-A1- 10 039 959
- US-A- 5 235 846
- US-A1- 2004 247 963
- US-A1- 2007 141 413

## Beschreibung

Die Erfindung betrifft ein Brennstoffzellensystem, im Besonderen ein Verfahren zum Betreiben dieses Brennstoffzellensystems, und insbesondere ein Verfahren zum Überwachen eines Hochtemperatur-Polymerelektrolyt-Brennstoffzellensystems (HT-PEFC).

### Stand der Technik

Brennstoffzellen sind elektrische Stromquellen, in denen durch elektrochemische Oxidation einer leicht oxidierbaren Substanz, meist Wasserstoff mit Sauerstoff, chemische Energie in elektrische Energie umgewandelt wird. Aufgrund der geringen Spannung, die eine einzelne Brennstoffzelle liefert, werden in der Regel viele Brennstoffzellen zu einer größeren Brennstoffzelleneinrichtung (Brennstoffzellenstapel) zusammengeschaltet.

Die Brennstoffzelle besteht jeweils aus einem Elektrolyten, wie z. B. einer Ionenaustauschermembran, je einer Gasdiffusionsschicht für Anode und Kathode sowie Gasverteilungskanälen, die an der Anode bzw. Kathode vorgesehen sind. Beträchtliche Fortschritte wurden in letzter Zeit bei den Polymerelektrolyt-Membran (PEM-) Brennstoffzellen gemacht. Diese Zellen benötigen zum Betrieb Wasserstoff. Die Speicherung von Wasserstoff erfordert entweder den Umgang mit komprimierten oder tiefkalten, verflüssigten Gasen. Die Polymerelektrolyt-Membran Brennstoffzelle (engl. Polymer Electrolyte Fuel Cell, PEFC) ist in der Regel gegenüber Kohlenmonoxid (CO), das in den Reformierungsverfahren gleichzeitig mit dem Wasserstoff entsteht, äußerst empfindlich. Beiden Reformierungsverfahren muss deshalb eine Gasaufbereitung angeschlossen werden, die das CO entfernt.

Die Polymerelektrolyt-Brennstoffzelle ist eine Niedertemperatur-Brennstoffzelle. Für Betriebstemperaturen bis 100 °C werden regelmäßig feste Polymermembranen, beispielsweise aus Nafion, eingesetzt. Für höhere Betriebstemperaturen bis ca. 200 °C sind Nafion Membranen jedoch regelmäßig nicht mehr geeignet, da sie bei diesen Temperaturen nicht genügend Feuchtigkeit aufweisen und ihre Leitfähigkeit somit deutlich absinkt. Ferner sind sie bei Temperaturen oberhalb von 150 °C thermisch instabil.

In diesem Temperaturbereichen werden daher Membranen aus Polyimid, wie beispielsweise aus Polybenzimidazol (PBI), verwendet, in welchen Phosphorsäure oder Schwefelsäure als Elektrolyt gebunden ist. Diese Materialien benötigen keine hohe relative Feuchte der Reaktionsgase, so dass ein Wassermanagement entbehrlich ist.

PBI-Membranen ermöglichen eine neue Generation von Polymerelektrolyt-Brennstoffzellen, die in der Regel kostengünstiger, effizienter und zuverlässiger sind als konventionelle Niedertemperatur-Brennstoffzellensysteme. Zudem greifen sie auf eine vereinfachte Gasaufbereitung zurück, die durch eine hohe Kohlenmonoxid- und Schwefeltoleranz gekennzeichnet ist. Ferner zeichnet sich der Betrieb eines Hochtemperatur Polymerelektrolyt-Brennstoffzellensystems (HT-PEFC) durch eine einfache Steuerung aus.

HT-PEFC basieren auf PBI-Membranen, die mit Phosphorsäure getränkt sind. Unter anderem aufgrund des hohen Gehaltes an Phosphorsäure sind die Membranen jedoch mechanisch empfindlich. Während des Betriebs sind diese Membranen zudem wechselnden thermischen und mechanischen Belastungen ausgesetzt. Daher ist eine Hauptausfallursache einer derartigen Brennstoffzelle das Versagen der Membran.

Nach dem bisherigen Stand der Technik kann ein Versagen der Membran im Betrieb nur über das Absinken der Zellspannung detektiert werden. In einem solchen Fall handelt es sich dann jedoch schon um einen großen Defekt, da kleinere Defekte regelmäßig nicht zu einem spürbaren Absinken der Zellspannung führen. Größere Defekte beeinträchtigen die Betriebssicherheit eines Stacks nachteilig, da der in größeren Mengen durchtretende Wasserstoff mit dem Luftsauerstoff reagiert und lokal zu Temperaturspitzen führt. Dadurch sind weitere Folgeschäden, wie beispielsweise die Beschädigung von Bipolarplatten, zu erwarten, so dass nicht nur die defekte Membran, sondern auch die ganze Einzelzelle ausgetauscht werden muss.

Zudem erfordern sicherheitskritische Anwendungen, wie zum Beispiel Luftfahrtanwendungen, die Früherkennung von sich abzeichnenden Defekten, was aber im Stand der Technik derzeit nicht möglich ist.

Aus US 5,235,846 ist ein System zum Erkennung einer Brennstoffzellen-Leckage bekannt, bei dem der CO₂-Gehalt des zugeführten Oxidationsmittels und der Kathodenabluft verglichen werden. Dazu ist sowohl in der Oxidationsmittelzuführung als auch in der Kathodenabluftabführung ein CO₂-Sensor angeordnet. Beim Einsatz eines CO₂-haltigen Brennstoffs auf der Anodenseite können so Leckagen über die Membran auf der Kathodenseite erkannt werden.

Aus US 2007/0141413 A1 ist ein mit Methanol betriebenes Brennstoffzellensystem bekannt, bei dem neben weiteren Kontrollmechanismen auf Grund der Detektion des CO₂-Gehaltes auf der Kathodenseite der Methanolgehalt auf der Anodenseite abgesenkt und damit entsprechend angepasst werden kann. Ein ähnliches Verfahren zur Einstellung der Konzentration eines flüssigen Brennstoffs in einer Brennstoffzelle wurde auch bereits in US 2004/0247963 A beschrieben.

In WO 2006/134461 A1 wird ein mit Wasserstoff betriebenes Brennstoffzellensystem offenbart, bei dem eine Kreislaufführung von der Kathodenabgasseite zur Anodengasseite vorhanden ist. Es ist ein Sensor zur Ermittlung oder Abschätzung der Konzentration des Brenngases, welches der Anode zugeführt wird, vorgesehen. In einer vorteilhaften Ausgestaltung handelt es sich bei diesem Sensor um einen CO₂-Sensor, der in der Kathodenabgasleitung angeordnet ist, und über eine daran angeschlossene Steuerungseinrichtung den Brenngaszustrom an H₂ derart eingestellt, dass der gemessene CO₂-Wert einen vorgegebenen Wert nicht überschreitet.

Bei der in DE 100 39 959 A1 beschriebenen Brennstoffzelle ist zur Regelung der Konzentration der Anodenflüssigkeit ein Sensor zur Erfassung der CO₂-Konzentration in der Kathodenabgasleitung vorgesehen, der den über die Membran erfolgten Brennstoffverlust erfasst.

### Aufgabe und Lösung

Der Erfindung liegt die Aufgabe zugrunde, ein Verfahren zu schaffen, mit dem sich schon beginnende Defekte in den PBI-Membranen einer Brennstoffzelle, bzw. eines Brennstoffzellensystems sicher ermitteln lassen. Darüber hinaus ist es Aufgabe der Erfindung, ein Brennstoffzellensystem bereitzustellen, mit dem das vorgenannte Verfahren durchführbar ist. Die Aufgaben der Erfindung werden gelöst durch ein Verfahren zur Überwachung eines Brennstoffzellensystems gemäß Hauptanspruch sowie durch ein Brennstoffzellensystem gemäß Nebenanspruch. Vorteilhafte Ausgestaltungen des Verfahrens sowie des Systems ergeben sich aus den jeweils rückbezogenen Ansprüchen.

### Gegenstand der Erfindung

Da die Erfindung das Zusammenspiel eines Verfahrens mit einer geeigneten Vorrichtung betrifft, werden nachfolgend die Verfahren und das Brennstoffzellensystem teilweise parallel beschrieben.

Die Erfindung basiert auf dem Gedanken, dass eine HT -PEFC üblicherweise mit CO- und CO₂-haltigem Reformergas betrieben wird.

Steigt die Konzentration an CO₂ im Kathodenabgas über das Normalmaß von ca. 300 ppm an, ist dies ein Indiz für eine sich abzeichnende Schädigung der Membran. In diesem Fall können ab einem definierten Grenzwert oberhalb des Normalwertes, z. B. ab 400 ppm oder 500 ppm geeignete Gegenmaßnahmen getroffen werden, wie beispielsweise das Abschalten des Systems und/oder Austausch einzelner Zellen. Oberhalb von 2000 ppm liegt regelmäßig eine deutliche Schädigung im Brennstoffzellensystem vor.

Das erfindungsgemäße Verfahren lässt sich auf mit reinem Wasserstoff betriebene Hochtemperatur-Polymerelektrolyt-Brennstoffzellensysteme anwenden. Da hierbei regelmäßig kein CO₂ in dem Brenngas vorhanden ist, welches durch die defekte Membran durchtreten kann, wird in diesem Fall zur Überprüfung der Zelle auf der Anodenseite definiert ein CO₂-Puls aufgegeben. Dazu kann unter anderem über einen CO₂-Speicher, wie beispielsweise eine handelsübliche CO₂-Kartusche, der Wasserstoff im Anodenraum zusätzlich in zeitlichen Abständen mit CO₂ beaufschlagt werden,

Tritt nun ein zunächst kleiner Defekt in der Membran auf, so treten die genannten Gaskomponenten zur Kathode über, wobei das CO durch die Anwesenheit des Luftsauerstoffs und des Katalysators zu CO₂ oxidiert wird. Demnach enthält das Kathodenabgas bei einem Membrandefekt eine zusätzliche Menge an CO₂. Dieses wird erfindungsgemäß in einem Mittel zur Ermittlung einer CO₂-Konzentration erfasst und dann gegebenenfalls in einer Kontrollelektronik ausgewertet.

Bei dem erfindungsgemäßen Verfahren wird also auf der Kathodenseite einer HT -PEFC wenigstens ein Mittel (Sensor) eingesetzt, welches den CO₂-Gehalt des Kathodenabgases in der Kathodenabgassammelleitung (Kathodenauslass) oder auch in der externen Kathodenabgasleitung zu ermitteln vermag. Ein dafür geeignetes Mittel könnte beispielsweise ein IR-basierter CO₂-Sensor sein, der vorteilhaft keine Querempfindlichkeit für Wasser aufweist, oder auch ein CO₂-Sensor, der regelmäßig mit einer schnellen pH-Wertänderung auf CO₂-reagiert.

Die Messposition des Mittels zur Bestimmung der CO₂-Konzentration kann dabei in einer ersten Ausgestaltung der Erfindung in der Kathodenabgasleitung des Brennstoffzellenstapels angeordnet sein.

Neben der prinzipiellen Kenntnis der Existenz eines solchen Defektes innerhalb des Brennstoffzellenstapels ist aber häufig auch die Kenntnis über die genauere Lage dieses Defektes im Stack von großem Interesse, insbesondere wenn dieser eine große Anzahl von Einzelzellen aufweist. In der nachfolgenden Ausgestaltung der Erfindung wird daher die CO₂-Konzentration nicht nur an einem einzigen Messpunk, z. B in der externen Kathodenabgasleitung ermittelt, sondern an verschiedenen Orten im internen Kathodenabgassystem, dem so genannten Manifold. In einer vorteilhaften Ausgestaltung der Erfindung wird dazu ein CO₂-Sensor mit einer Lanze versehen, die in den Kathoden-Manifold innerhalb des Stacks hineinreicht und dort die Luft für die Messung ansaugt. Die Lanze kann innerhalb des Manifolds derart gezielt verschoben werden, so dass eine einzelne Messung lokal dem Kathodenabgas einer bestimmten einzelnen Zelle zugeordnet werden kann.

Befindet sich die Lanze beispielsweise direkt am Auslass einer defekten Zelle, wird dort die höchste CO₂-Konzentration verzeichnet werden. Dabei wird der Fachmann im Einzelfall entscheiden können, ob für die Überprüfung des Stacks für jede Einzelzelle eine Messung erforderlich ist, oder ob für einen gewissen Bereich, zum Beispiel alle 5 oder 10 Zellen, eine Messung vorgenommen werden soll. Je differenzierter die Messungen erfolgen, desto genauer kann eine einzelne defekte Zelle detektiert werden.

In einer weiteren Ausgestaltung der Erfindung erfolgt die Messung der CO₂-Konzentration nicht mit Hilfe einer verschiebbaren Lanze, sondern der Brennstoffzellenstapel selbst weist in bestimmten Abständen am Manifold Auslässe, beispielsweise in Form von Ventilen auf, an denen direkt ein oder mehrere CO₂-Sensoren angeschlossen werden können.

### Spezieller Beschreibungsteil

Nachfolgend wird die Erfindung anhand von Figuren zu Brennstoffzellensystemem näher erläutert, mit denen das erfindungsgemäße Verfahren durchgeführt werden kann, ohne dass dies zu einer Einschränkung der Erfindung und der beanspruchten Gegenstände führt. Es zeigen die
- Figur 1:: Ausführungsbeispiel eines Brennstoffzellensystems mit einem Mittel zur Ermittlung einer CO₂-Konzentration in dem Kathodenabgas.
- Figur 2:: Ausführungsbeispiel eines Brennstoffzellensystems mit einem Mittel zur Ermittlung einer CO₂-Konzentration in dem Kathodenabgas und als Referenz in dem Oxidationsmittel.
- Figur 3:: Ausführungsbeispiel eines Brennstoffzellensystems mit einem Mittel mit einer verschiebbaren Lanze zur Ermittlung einer CO₂-Konzentration an verschiedenen Stellen in der Leitung des Manifolds.
- Figur 4:: Ausführungsbeispiel eines Brennstoffzellensystems mit einem Mittel zur Ermittlung einer CO₂-Konzentration, bei dem das Kathoden-Manifold selbst verschiedene Auslässe zur Messung von CO₂ an verschiedenen Stellen aufweist.

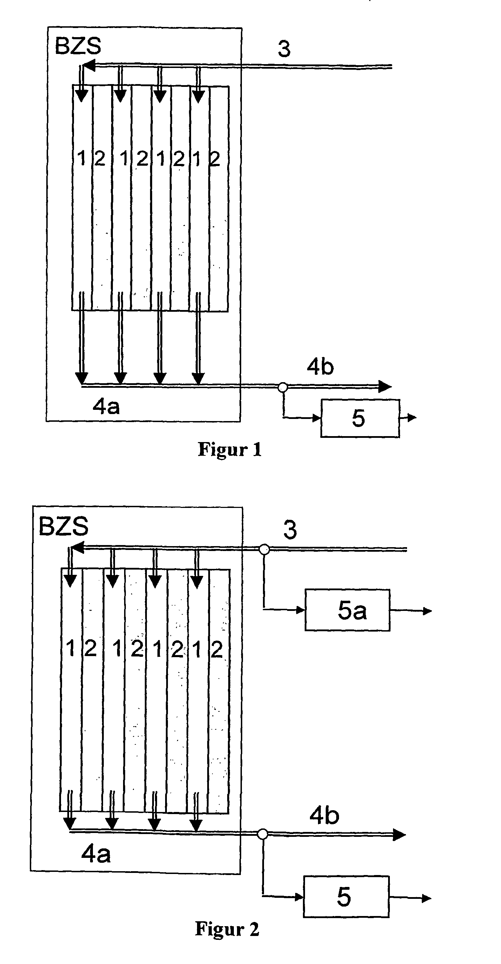

In den Figuren 1 bis 4 ist jeweils schematisch ein Brennstoffzellenstapel mit Einzelzellen dargestellt, der jeweils eine Anode mit Anodenraum (2), eine Kathode mit Kathodenraum (1) sowie einen dazwischen angeordneten Elektrolyten umfasst. Zu den einzelnen Kathodenräumen (1) führt eine Kathodenzufuhrleitung (3). Das Kathodenabgas aus den Einzelzellen sammelt sich zunächst in der internen Kathodenabgassammelleitung (4a) und wird dann über die externe Kathodenabgasleitung (4b) aus dem Brennstoffzellenstapel herausgeführt.

Im ersten Ausführungsbeispiel ist ein Mittel zur Ermittlung einer CO₂-Konzentration in der externen Kathodenabgasleitung (Kathodenauslass) (4b) angeordnet. Das Mittel selbst kann dabei innerhalb der Leitung angeordnet sein, oder aber in einem Abzweig (Bypass) dieses Leitungsteils. Dies ist insbesondere dann der Fall, wenn zur Ermittlung der CO₂-Konzentration durch das Mittel nur ein geringer Teilstrom benötigt wird, wie beispielsweise bei einem CO₂-Sensor.

Beim Betrieb der HT-PEFC mit reinem Wasserstoff wird zur Überprüfung der Zellen auf der Anodenseite dem Betriebsmittel ein definierter CO₂-Puls aufgegeben.

Eine weitere Ausgestaltung ist in Figur 2 dargestellt. Hier wird zur Differenzbildung des CO₂-Gehaltes sowohl ein erstes Mittel (5) zur Ermittlung der CO₂-Konzentration in der externen Kathodenabgasleitung (4b) angeordnet, als auch ein weiteres Mittel(5a) in der Oxidationsmittelzuführung (3). Durch diese Anordnung ist man vorteilhaft unabhängig von der CO₂-Konzentration des zugeführten Oxidationsmittels.

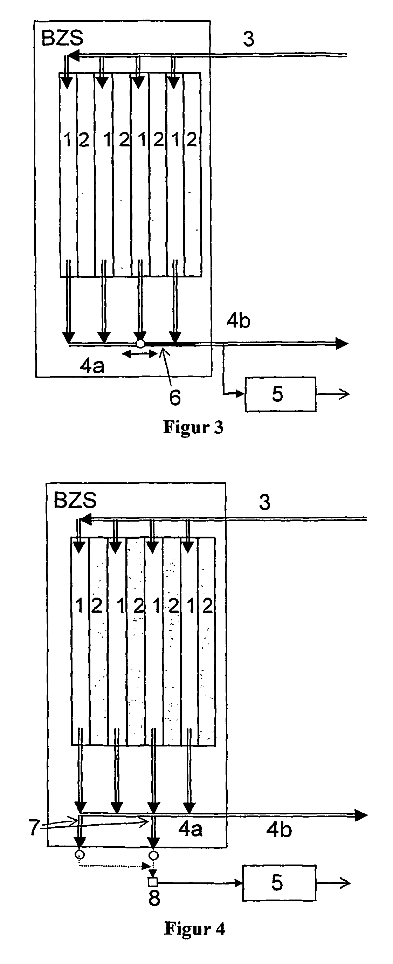

Die Figur 3 zeigt eine Ausgestaltung der Erfindung für den Fall, dass eine Information über defekte Zellen nicht nur pauschal über den gesamten Stack benötigt wird, sondern eine detaillierte Aussage zu einzelnen Zellen, bzw. zu Zellabschnitten erwünscht ist. Hier weist das Mittel zur Ermittlung einer CO₂-Konzentration eine verschiebbare Lanze zum Ansaugen eines Gases auf, die innerhalb der Kathodenabgassammelleitung(Manifold) im internen Teil des Brennstoffzellenstapels variabel verschoben werden kann. Dies bietet den Vorteil, dass die Lanze lokal innerhalb des Manifolds (4a) derart verschoben werden kann, dass die Gasansaugung für die Ermittlung der CO₂-Konzentration exakt an einer Stelle erfolgen kann, an der das Kathodenabgas aus einer Einzelzelle das Manifold eintritt. Somit ist über die Messung der CO₂-Konzentration eine direkte Aussage über die Funktionsfähigkeit dieser Einzelzelle möglich. Bei dem Verfahren zur Ermittlung der CO₂-Konzentzrationen bleibt es dem Fachmann überlassen, ob er jede Einzelzelle, oder z. B. abschnittsweise die Messungen vornimmt, um zunächst über einen gewissen Zellbereich Aussagen zur ordnungsgemäßen Funktionsweise treffen zu können. Sofern eine Abweichung auftritt, kann dann detaillierter das Kathodenabgas der Einzelzellen in diesem Bereich genauer untersucht werden.

Eine weitere Ausgestaltung der Erfindung, wie sie in Figur 4 dargestellt ist, sieht vor, dass anstelle einer variablen Lanze das Kathoden-Manifold (4a) der Brennstoffzellenstapel selbst schon mehrere Abzweigungsmöglichkeiten in gewissen Abständen vorsieht. Dies könnte beispielsweise durch ein Mehrwegeventil alle 60 Zellen, bzw. bei erhöhter Genauigkeit auch alle 20 Zellen, realisiert werden. Dadurch ist es möglich, an diesen Stellen das Kathodenabgas zu dem Mittel zur Ermittlung der CO₂-Konzentration zu führen, um so Aussagen darüber treffen zu können, ob bis zu diesem Zellabschnitt erhöhte CO₂-Konzentrationen vorliegen. Ermittelt man nun die CO₂-Konzentration des Kathodenabgases an den einzelnen Abzweigungsstellen parallel oder nacheinander, so lässt sich durch einen Vergleich dieser Messungen eine oder mehrere defekte Zelle auf einfache Weise zumindest auf einen Bereich in diesem Fall ca. 60 Zellen (oder bei erhöhter Genauigkeit auch ca. 20 Zellen) eingrenzen.

## Patentansprüche

1. Verfahren zur Überwachung eines mit reinem Wasserstoff betriebenen Hochtemperatur- Polymerelektrolytmembran-Brennstoffzellenstapels mit wenigstens zwei Hochtemperatur-Polymerelektrolytmembran-Brennstoffzellen (HT-FECF), bei dem die CO₂-Konzentration des Kathodenabgases ermittelt wird, **dadurch gekennzeichnet,**
**dass** auf der Anodenseite des Hochtemperatur-Polymerelektrolytmembran-Brennstoffzellenstapels ein CO₂-Puls aufgegeben wird, und im Anschluss daran die CO₂-Konzentration des Kathodenabgases ermittelt wird.

2. Verfahren nach Anspruch 1, bei dem wenigstens ein IR-basierter CO₂-Sensor zur Ermittlung der CO₂-Konzentration eingesetzt wird.

3. Verfahren nach einem der Ansprüche 1 bis 2, bei dem die CO₂-Konzentration in der externen Kathodenabgasleitung ermittelt wird.

4. Verfahren nach einem der Ansprüche 1 bis 3, bei dem die CO₂-Konzentration des Kathodenabgases wenigstens an einer Stelle innerhalb des Stapels ermittelt wird.

5. Verfahren nach einem der Ansprüche 1 bis 4, bei dem die CO₂-Konzentration des Kathodenabgases innerhalb des Stapels ermittelt wird.

6. Verfahren nach einem der Ansprüche 1 bis 5, bei dem die CO₂-Konzentration des Kathodenabgases an wenigstens zwei Stellen innerhalb des Stapels ermittelt wird.

7. Verfahren nach einem der Ansprüche 4 bis 6, bei dem die CO₂-Konzentration des Kathodenabgases über eine verschiebbare Lanze in einer Kathodenabgassammelleitung innerhalb des Stapels ermittelt wird.

8. Verfahren nach einem der Ansprüche 1 bis 7, bei dem zusätzlich die CO₂-Konzentration in der Oxidationsmittelzuführungsleitung des Hochtemperatur- Polymerelektrolytmembran-Brennstoffzellenstapels ermittelt wird.

## Claims

1. Method for monitoring a high temperature polymer electrolyte membrane fuel cell stack operated with pure hydrogen with at least two high temperature polymer electrolyte membrane fuel cells (HT-FECF), in which the CO₂ concentration of the cathode exhaust gas is determined, **characterised in that**,
a CO₂ pulse is applied to the anode side of the high temperature polymer electrolyte membrane fuel cell stack and then the CO₂ concentration of the cathode exhaust gas is determined.

2. Method according to claim 1, in which at least one IR based CO₂ sensor is used to determine the CO₂ concentration.

3. Method according to one of claims 1 to 2, in which the CO₂ concentration in the external cathode exhaust gas circuit is determined.

4. Method according to one of claims 1 to 3, in which the CO₂ concentration of the cathode exhaust gas is determined at least at one place within the stack.

5. Method according to one of claims 1 to 4, in which the CO₂ concentration of the cathode exhaust gas is determined within the stack.

6. Method according to one of claims 1 to 5, in which the CO₂ concentration of the cathode exhaust gas is determined at least at two places within the stack.

7. Method according to one of claims 4 to 6, in which the CO₂ concentration of the cathode exhaust gas is determined through a lance, which may be moved, in a cathode exhaust gas collection circuit within the stack.

8. Method according to one of claims 1 to 7, in which the CO₂ concentration in the oxidising agent feed circuit of the high temperature polymer electrolyte membrane fuel cell stack is determined in addition.

## Revendications

1. Procédé servant à surveiller un empilement de piles à combustible à membrane électrolytique polymère à haute température fonctionnant avec de l'hydrogène pur, comprenant au moins deux piles à combustible à membrane électrolytique polymère à haute température (HT-PEMFC), dans le cadre duquel la concentration en CO₂ du gaz d'échappement de cathode est déterminée, **caractérisé en ce**
**qu'**une impulsion de CO₂ est introduite sur le côté anodique de l'empilement de piles à combustible à membrane électrolytique polymère à haute température, et qu'immédiatement après est déterminée la concentration en CO₂ du gaz d'échappement de cathode.

2. Procédé selon la revendication 1, dans le cadre duquel au moins un capteur infrarouge de CO₂ est utilisé pour déterminer la concentration en CO₂.

3. Procédé selon l'une quelconque des revendications 1 à 2, dans le cadre duquel la concentration en CO₂ est déterminée dans la conduite de gaz d'échappement de cathode externe.

4. Procédé selon l'une quelconque des revendications 1 à 3, dans le cadre duquel la concentration en CO₂ du gaz d'échappement de cathode est déterminée au moins en un emplacement à l'intérieur de l'empilement.

5. Procédé selon l'une quelconque des revendications 1 à 4, dans le cadre duquel la concentration en CO₂ du gaz d'échappement de cathode est déterminée à l'intérieur de l'empilement.

6. Procédé selon l'une quelconque des revendications 1 à 5, dans le cadre duquel la concentration en CO₂ du gaz d'échappement de cathode est déterminée en au moins deux emplacements à l'intérieur de l'empilement.

7. Procédé selon l'une quelconque des revendications 4 à 6, dans le cadre duquel la concentration en CO₂ du gaz d'échappement de cathode est déterminée par l'intermédiaire d'une lance pouvant être déplacée dans une conduite collectrice de gaz d'échappement de cathode à l'intérieur de l'empilement.

8. Procédé selon l'une quelconque des revendications 1 à 7, dans le cadre duquel la concentration en CO₂ est en outre déterminée dans la conduite d'amenée du moyen d'oxydation de l'empilement de piles à combustible à membrane électrolytique polymère à haute température.
